# EUROPEAN PATENT APPLICATION

(11) **EP 4 501 610 A1**
(43) Date of publication of application: **05.02.2025**
(21) Application number: 23189224.1
(22) Date of filing: 02.08.2023
(51) Int. Cl.: B29D 11/00

(54) **METHOD FOR APPLYING A MARKING ON A SURFACE OF A GLASS MOLD**

(71) Applicant: Carl Zeiss Vision International GmbH, 73430 Aalen (DE)
(72) Inventor: Wolff, Christian, 73447 Oberkochen (DE); Launay, Florian, 73447 Oberkochen (DE); Zeng, Zhiyong, 73447 Oberkochen (DE); Yang, Zhichao, 73447 Oberkochen (DE)
(74) Representative: Carl Zeiss AG - Patentabteilung

(57) **Abstract**

The invention provides a method 100 for applying a marking 1, 1a, 1b on a surface 2 of a glass mold 3 suitable for manufacturing a marked spectacle lens blank 4. The method 100 comprises applying a pattern 5 of a masking agent 6 on a preselected part of the surface 2 of the glass mold 3 by inkjet-printing.

## Description

### FIELD OF THE INVENTION

The present invention relates to method configured for applying a marking on a surface of a glass mold suitable for manufacturing a marked spectacle lens blank, a glass mold configured to manufacture a marked spectacle lens blank, respective data sets, the use of a glass mold, a masking agent, and the use of the masking agent, a marked spectacle lens blank, and an apparatus for applying a marking on a surface of a glass mold.

### BACKGROUND ART

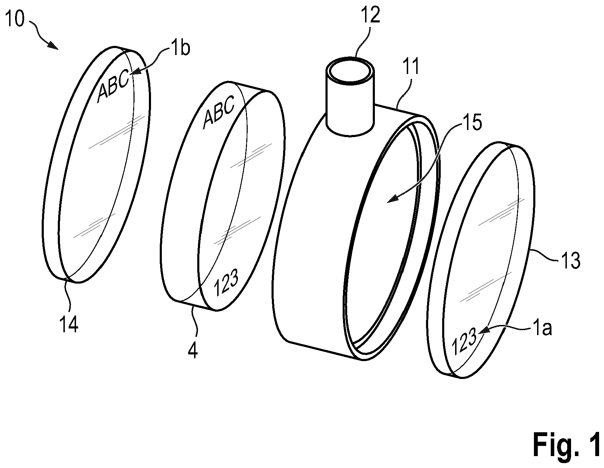

Two of the first steps within the production of ophthalmic lenses are the casting and consequent curing of lens blanks, also referred to as "pucks." Using these lens blanks, individualized lenses are produced. During casting, a pre-mixed, reactive monomer mixture is filled into a mold assembly. The mold assembly consists of two mineral glass pieces of optical surface quality and a rubber-like sealing as depicted in figure 1. The mold assembly is normally used repeatedly to mold plastic spectacle lenses.

The front- and backside of these mineral glass pieces contain information in form of permanent markings. The markings exposed to the to-be-cured monomer mixture are transferred to the cured lens blank. The entirety of transferred and non-transferred markings allows for the seamless tracking of mold assembly parts and therefrom derived lens blanks. The markings can, for example, be used to distinguish products of a certain spectacle lens manufacturer from products of other manufacturers. They may contain information such as model number, standard, and an indication of a specific position, for instance as reference for alignment with the shape of a spectacle frame.

The mechanical stress applied to the mineral glass pieces upon pull-out of the lens blank is proportional to the adhesion between both bodies. In comparison to optical polymers having a higher refractive index, CR39 shows the highest adhesion towards the mineral glass pieces and defects like mold pull-outs occur starting on pre-existing defects, e. g. caused by markings applied by laser shots.

Currently, markings can be applied either by a method combining dip-coating, engraving, and chemical etching or by laser engraving. The first method has a limited resolution due to the carbide-tip used for engraving but produces a smooth, etched marking for which the removed material is chemically dissolved and leaves no micro-cracks on the remaining glass piece.

The second method, i. e. laser engraving, shows a very high resolution but allows for the formation of micro-fractures in the vicinity of the shot dots due to a high thermal load, possibly due to phase transition at a temperature of about 870 °C associated with an increase in volume of about 4 %. Consequently, the stability and cycle number of molds is reduced.

JP 4 458 837 B2 is regarded as the closest prior -art and discloses a conventional marking method for forming a marking on the molding surface of a glass mold for spectacle lenses by chemical etching. Here, masking is formed by applying wax, preferably paraffin wax or beeswax, and this prior art focuses on controlling the depth of a recess that constitutes the marking during a subsequent etching stop by varying the concentration of the hydrogen fluoride solution and the reaction time.

To obtain the mask, the wax is applied to the entire molding surface and thereafter removed from the portion corresponding to the shape of the mark to form the window. The partial wax removal can be performed by using an NC stamping device. However, the possible resolution of the marking is rather low as wax removal with NC stamping leads to comparably large windows corresponding to the shape of the mark. Moreover, this masking method requires high amounts of wax as the later windows need to be filled with wax at first.

WO 2019 / 158 651 A2 discloses a method for producing a semi-finished spectacle lens wherein a removable adhesive is applied to the semi-finished spectacle lens, the adhesive having a code used to clearly identify the semi-finished spectacle lens. The semi-finished spectacle lens also comprises a second code engraved into the semi-finished spectacle lens by using a mold assembly with a code corresponding to the second code engraved. However, no details concerning the manufacturing of the mold assembly are disclosed.

DE 2 542 714 A1 discloses a method for marking silicone rubber contact lenses. The markings are etched or engraved into the press-mold in a shape distinct from the surface characteristics of the surrounding lens area, so that, when the contact lens is manufactured the marking appears as an embossment. However, apart from the disclosure of suitable etching agents, no further details concerning the manufacturing of the press-mold are disclosed.

WO 96 / 32 221 A1 discloses a method for marking glass molds for ophthalmic lenses. During a first step, a layer of a material capable of diffusing into the glass mold upon irradiation with a laser is applied to a surface of the mold. Thereafter, the mold is irradiated by a laser leading to laser engraving and diffusion of the material into the glass mold. However, the resolution of the obtained marking is rather low due to the diffusion process. Moreover, the marking is obtained by a color change of the glass after diffusion. Hence, the color marking cannot be transferred to a lens blank manufactured using the glass mold. Concerning the laser engraving, the drawbacks mentioned above are associated therewith.

WO 02 / 42 828 A1 discloses a marking method performed by focusing and steering a laser beam on and cross an optical element, and forming on, or within, the optical element a series of discreet sub-marks wherein the combination of sub-marks provide the mark. Although the use of the combination of sub-marks may help to reduce the formation of unwanted micro-fractures the disclosed method may still lead to damages of the optical element.

EP 1 673 213 B1 discloses a process for manufacturing a contact lens with indicia comprising: electrochemically removing metal from a metal mold tool to form anisotropic indicia in the metal mold tool that correspond to indicia for the contact lens; casting a mold with the mold tool to provide a negative mold having the anisotropic indicia of the metal mold tool; and filling the mold with a contact lens material and curing the contact lens material to form the contact lens with anisotropic indicia. The method may further comprise masking the mold tool with a resist material that has one or more openings corresponding to the shape of the indicia for the contact lens; exposing the openings to a nitrate or halide solution; and applying a DC voltage to the solution in order to anisotropically etch the metal in the openings. This method, however, requires an electrically conductive mold material. Moreover, the resolution of the obtained indicia still low. No further details are given concerning the patterning of the resist material with the openings.

### SUMMARY OF THE INVENTION

With respect to the mentioned state of the art, it is an objective of the present invention to provide a method and an apparatus configured to apply a marking on a surface of a glass mold suitable for manufacturing a marked spectacle lens blank by which the above-mentioned drawbacks can be overcome. The present invention aims to obtain a marking with high resolution and to avoid damages of the glass mold which attributes to the application of the marking.

Furthermore, it would be desirable to provide a spectacle lens blank marked with a high resolution marking comprising few or even no defects.

These objectives are achieved by the subject-matter of the independent claims. The dependent claims define further developments.

Throughout this specification the following definitions apply:
The term "Arrhenius base" may refer to a chemical substance that dissociates in water to form hydroxide (OH⁻) ions. Typically examples of Arrhenius bases are sodium hydroxide and potassium hydroxide.

The term "computer-readable medium" may refer to a medium capable of storing data in a format easily readable by a digital computer.

The term "data set" may refer to a collection of data. A data set's structure and properties can be defined by several characteristics such as number and types of attributes or variables, and various statistical measures. The values may be numbers, such as real numbers or integers, but may also be nominal data (i.e., not consisting of numerical values).

The term "data carrier signal" may refer to a carrier frequency into which data are modulated for transmission in a network.

The terms "direct" and "directly" in the context of deposition or application of a composition to a surface means that the composition is deposited on or applied to the surface without any other materials, for instance in form of layers, in between the surface and the composition.

The term "etching agent" may refer to a single chemical substance or a composition which is able to chemically etch mineral glass either readily or after activation, e. g. after reaching a certain temperature. During etching, the mineral glass chemically reacts with the etching agent, e. g. according to the following chemical reaction: SiO₂ + 4 HF → SiF₄ + 2 H₂O. After etching, a surface structuring may be obtained wherein etched areas form recesses.

The term "glass mold" may refer to a mineral glass part of a mold assembly. A typical mold assembly may comprise two glass molds connected by a central element or sealing member to form a mold cavity. Each glass mold may correspond to either the front or back surface of a spectacle lens blank manufactured therewith. For manufacturing a spectacle lens blank, the mold cavity can be filled with a liquid monomer composition which solidifies forming a solid polymer, e. g. upon heating and/or UV irradiation.

The term "inkjet printing" may refer to a non-contact method of creating a pattern on a surface by discrete deposition of ink droplets. Common procedures for inkjet printing include the continuous inkjet method and the drop-on-demand method, both well known to the person skilled in the art. The term "ink" may refer to any composition that can be deposited droplet by droplet, i. e. printed. To enable or facilitate the formation and deposition of droplets it might be required to heat the ink to a certain temperature.

The term "marking" may refer to one or more macroscopic elements, for example a number, a letter of any type of graphic, a graphic representation such as a dot, symbol, a DataMatrix-Code (DMC code), etc. The marking may be normally visible, e. g. visible to an unaided or naked eye, without the essential need to utilize instruments or apparatuses such as magnifying devices, nor special techniques such as the application of polarized or ultraviolet light, for detection. The marking may also be non-visible or only normally visible in part. Non-visible means that the marking is not visible to an unaided or naked eye. Instruments or apparatuses such as magnifying devices, or special techniques such as the application of polarized or ultraviolet light, are needed for its detection.

The marking can, for example, be used as identification mark and may display information such as model number, reference positions, standards, etc. Moreover, the marking may be used to distinguish the glass mold and the spectacle lens blank manufactured therewith from products of other companies.

The term "masking agent" may refer to a material suitable to adhere to and cover the surface of the glass mold and thus preventing contact between an etching agent and the surface area of the glass mold masked by the masking agent. The masking agent can either consist of a single chemical substance or be a composition comprising different chemical substances.

The term "melting temperature" or "melting point" refer to the temperature at which a substance changes from solid to liquid state.

The term "pattern" may refer to one or more macroscopic elements. The pattern may form a negative pattern of the marking, i. e. the pattern and the marking may complement each other.

The term "spectacle lens" refers to an ophthalmic lens worn in front of, but not in contact with, the eyeball (ISO 13666:2019(E), section 3.5.2), where an ophthalmic lens is a lens intended to be used for purposes of measurement, correction and/or protection of the eye, or for changing its appearance (ISO 13666:2019(E), section 3.5.1). Here, a spectacle lens includes, but not limited thereto, a corrective lens, protective lens, absorptive lens, clear lens, tinted lens, uniformly tinted lens, gradient-tinted lens, double gradient-tinted lens, photochromic lens, polarizing lens, balancing lens, matching lens, etc. as defined in Section 3.5.3 to 3.5.13 of DIN ISO 13666:2019. Further, according to Section 3.6 of DIN ISO 13666:2019, a spectacle lens can have various lens shapes including, but not limited thereto, curved-form lens, plano lens, spherical lens, cylindrical lens, spherocylindrical lens, toric lens, aspheric lens, atoric lens, etc.

The term "spectacle lens blank" refers to a semi-finished blank which is a piece of optical material with one optically finished surface for the making of a spectacle lens and a rough blank which is a lens shaped piece of optical material with neither side having finished surfaces (DIN ISO 13666:2019, section 3.8.1). Accordingly, a spectacle lens blank may be a semi-finished blank or a rough blank.

The term "substance" refers to a chemical substance which is a form of matter having a constant chemical composition and characteristic properties (IUPAC. Compendium of Chemical Terminology, 2nd ed. (the "Gold Book"). Compiled by A. D. McNaught and A. Wilkinson. Blackwell Scientific Publications, Oxford (1997). Online version (2019) created by S. J. Chalk. ISBN 0-9678550-9-8. https://doi.org/10.1351/goldbook.).

The term "surface" refers to any layer or surface of a three-dimensional object, e. g. a glass mold that is in direct contact with the environment. The surface can be regarded as its boundary. The surfaces of a glass mold include its front surface, i. e. front side, side surface, i. e. edge, and back surface, i. e. backside. The surface may be a flat surface or a curved surface, e. g. a convexly or concavely curved surface.

The term "virtual representation of a glass mold" refers to a digital representation (a so-called digital twin) of a glass mold such as an implementation of a glass mold having the respective structural design features and/or a numerical and/or analytical data set describing the design features (numerical and/or analytical representation). For example, such a data set may be stored in a memory of a computer or on a computer-readable (particularly non-transitory) storage medium. In addition, the data set may be retrievable from a data network like, for example, the internet or a local area network (LAN). A data set resembling a representation of a glass mold may include some or all sorts of features of the glass mold, in particular, a description of the structural features, the materials of the units, etc. Such a description may include, for example, a mathematical description of the structural features of the glass mold including its marking. The virtual representation can be in a coded or encrypted form. The virtual representation of the glass mold may in addition or alternatively include computer-readable instructions for controlling one or more manufacturing machines of the glass mold in order to produce a physical glass mold having the respective features.

The articles "a", "an", and "the" as used in this specification and the appended claims include plural referents unless expressly and unequivocally limited to one referent.

The term "and/or" as used herein, when used in a series of two or more elements, means that any of the listed elements may be used alone, or any combination of two or more of the listed elements may be used.

In a first aspect, the invention provides a method configured for marking a glass mold for manufacturing a spectacle lens blank wherein a pattern of a masking agent is applied on a preselected part of a surface of the glass mold wherein the pattern of the masking agent is applied by inkjet-printing.

The first aspect of the invention can be further specified to a method configured for applying a marking on a surface of a glass mold suitable for manufacturing a marked spectacle lens blank comprising: applying a pattern of a masking agent on a preselected part of the surface of the glass mold with at least one opening, and applying an etching agent at least onto a part of the surface comprising the at least one opening, and the pattern of the masking agent is applied by inkjet-printing.

The first aspect of the invention can be furthermore specified to comprise the following steps: applying a pattern of a masking agent on the surface of the glass mold to obtain a partially masked surface with masked areas and non-masked areas, and applying an etching agent onto the partially masked surface and etching the non-masked areas to obtain the marking.

The marking can be applied to any glass surface of the glass mold, e. g. its front side or back side, and depending on the structure size, the marking may be a visible or non-visible marking. In a specific example, the marking is applied to a surface of the glass mold which is to be used to limit the mold cavity formed by a mold assembly using the glass mold. Thus, a positive of the glass mold's marking can be transferred to a spectacle lens blank manufactured by using the glass mold resulting in a marked spectacle lens blank.

By applying the masking agent, contact between the etching agent and the masked surface area is avoided such that only non-masked areas are etched. Thus, the outer boundary of the later marking corresponds to the shape of the non-masked areas.

According to the invention, the pattern of the masking agent is applied by inkjet-printing.

Inkjet-printing of the pattern of the masking agent allows for the formation and deposition of small droplets of the masking agent on the glass mold's surface yielding in a high resolution of the pattern and thus that of the later marking on the spectacle lens blank. In other words, a much higher resolution, for example a pixel-wise resolution, may be obtained as compared to conventional chemical etching methods using a mask which is engraved using an engraving equipment such as carbide tips or stamping devices.

Applying the masking agent by inkjet-printing allows for great freedom in design and complexity of the pattern. The pattern can, for example, be defined using appropriate computer programs and defining pixels as either white or black corresponding to non-masked and mask areas, respectively. The pixel's shape can be used as one influencing parameter for tuning printing patterns and optimized with regard to the recognition of derived markings by optical readers.

Preferably, the masking agent is directly printed on the surface of the glass mold.

By using the inkjet-printing technique, damages of the glass mold such as damages occurred by using laser engraving methods known in the state of the art, e. g. micro fractures, can be avoided. Thus, the service life of the glass mold can be prolonged with reducing costs and time required for the production of glass molds as well as for the subsequent manufacturing of marked spectacle lens blanks.

Furthermore, the quality of marked spectacle lens blanks using the marked glass mold can be enhanced as damages, e. g., during mold pull-out starting on pre-existing defects of the glass mold can be reduced. This holds especially true for optical polymers exhibiting a high adhesion towards the glass mold such as CR-39.

Thus, the proposed method combines the advantageous characteristics of both methods known in the state of the art, i. e. a method combining dip coating, engraving, and chemical etching and a laser-engraving method, i. e. markings with a high resolution can be obtained without micro-cracks or micro-fractures.

In addition, the amount of masking agent can be reduced as compared to a method relying on the application of an entire masking layer which is later engraved. Moreover, inkjet printing can be easily automated.

Preferably, the masking agent has a melting temperature between 30°C and 80°C, e. g. between 40°C and 65°C.

The masking agent may be an unsaturated or saturated fatty acid, i. e. a carboxylic acid with an aliphatic chain, which is either saturated or unsaturated, preferably with a melting temperature between 30°C and 80°C, more preferably between 40°C and 65°C. Further examples of suitable masking agents comprise fatty acid esters, i. e. esters that result from the combination of a fatty acid with an alcohol such as glycerol preferably with a melting temperature between 30°C and 80°C, more preferably between 40°C and 65°C. For the application of the inkjet-printing, the masking agent needs to be further modified to be suitable for the inkjet-printing. In other words, the masking agent of the present invention should be liquefied by increasing its temperature above the melting temperature such that the masking agent can be easily printed producing small droplets of the masking agent. Upon contact with the surface of the glass mold, the masking agent solidifies due to the lowered temperature below the melting temperature, thereby preventing unwanted spread of the droplets. These temperature effects and application thereof can be enhanced by heating the inkjet-printer, e. g. its print head, and/or cooling the glass mold surface. Heating and cooling of the masking agent can be done by any known and conventional methods. In a preferred embodiment, a so-called hotmelt print head can be used for inkjet-printing which leads to remarkable advantages. By using a hotmelt print head, the step of applying and heating the masking agent can be done simultaneously in a single step, and thus yield and efficiency of the process are highly increased.

The masking agent should be compatible with the etching agent insofar that the masking agent withstands the applied etching agent for an appropriate time period needed for the etching of the glass mold.

The etching agent may provide hydrofluoric acid, for instance by comprising hydrofluoric acid or forming hydrofluoric acid. The etching agent may comprise additives such as thickeners to simplify its application on the partially masked surface. For example, the etching agent may be an etching cream or paste. Preferably, the etching agent is directly applied on the partially masked surface.

The etching agent may be applied at least on to a part of the surface of the glass mold comprising the at least one opening by pad printing, which allows for uniform application on a curved surface of the glass mold. Preferably, the etching agent may be gel- or paste-like to avoid its redistribution in case of its application on a curved surface.

In a specific development of the proposed method, the masking agent is at least one selected from the group of palmitic acid (CAS 57-10-3) and monostearin (CAS 31566-31-1). Monostearin can be 1-monostearin (CAS 123-94-4) and/or 2-monostearin (CAS 621-61-4).

The mentioned substances exhibit the following melting temperatures and can thus be melted by applying hot water above the respective melting temperatures: palmitic acid - 61.8 °C, 1-monostearin - 40.5 °C, 2-monostearin - 74 to 75 °C, monostearin - 57 °C. Moreover, these substances can be converted into water soluble salts by applying, for example, 1 M KOH. Advantageously, the substances mentioned are not hazardous to health.

In a further specific development, the method further comprises removing the masking agent.

Due to the melting point, the masking agent can be washed with water having a temperature equal to or higher than the melting point of the masking agent. For instance, water with a temperature higher than 45 °C, preferably 50 °C, more preferably 60 °C, or most preferably 70 °C, may be used. Removal of the masking agent may be facilitated wiping with a cleaning cloth.

Further, the masking agent can at least be partly, preferably fully, converted into a water-soluble salt by applying an aqueous solution of an Arrhenius base such as sodium hydroxide and/or potassium hydroxide. Hence alternatively or additionally, the masking agent can be removed by washing with an aqueous solution of an Arrhenius base, such as sodium hydroxide and/or potassium hydroxide. For example, the masking agent may be a weak acid that can chemically be neutralized by sodium hydroxide and/or potassium hydroxide. The salt formed during neutralization may be removed by washing with water due to its high water solubility.

By the treatment with an aqueous solution of an Arrhenius base, the masking agent may be converted into a water-soluble salt which facilitates its removal. As washing with Arrhenius bases, such as sodium hydroxide and/or potassium hydroxide, are standard processes in the manufacturing and use of glass molds, the process can be easily integrated into existing methods.

Using both hot water and an aqueous solution of an Arrhenius base may facilitate the complete removal of the masking agent after etching while avoiding the use of aggressive cleaning chemicals. A very clean glass mold surface may be obtained which can readily be used for the manufacturing of marked spectacle lens blanks with high optical quality.

In a further specific development, the method further comprises removing the etching agent before removing the masking agent. The etching agent can be removed by washing with water having a temperature below the melting point of the masking agent, without any need to use aggressive and expensive chemicals.

In a further embodiment, the method of the present invention further comprises a step of manufacturing a spectacle lens blank using the glass mold with the marking produced by the present method explained above.

In a second aspect, the invention provides a glass mold for manufacturing a marked spectacle lens blank, the glass mold exhibiting a surface partially masked with a masking agent. The masking agent is applied by inkjet printing.

Concerning the properties, the selection of suitable masking and methods for applying a masking agent to obtain a surface partially masked with a masking agent, reference is made to the above explanations describing the method for applying a marking on a surface of a glass mold for manufacturing a marked spectacle lens blank. The advantages of the method for applying a marking on a surface of a glass mold apply to the glass mold accordingly.

In a third aspect, a masking agent suitable for masking a glass mold configured to manufacture a marked spectacle lens blank from an etching agent characterized in that the masking agent comprises liquefied unsaturated or saturated fatty acid and/or fatty acid ester with a melting point between 30°C and 80°C.

Concerning the properties, the selection of suitable masking agent and methods for applying a masking agent, reference is made to the above explanations describing the method according to the first aspect of the present invention.

In a fourth aspect, the invention provides a data set in the form of a computer-readable data carrier signal or a data set stored on a computer-readable medium comprising at least one kind of the following kinds of data: (i) a virtual representation of a glass mold for manufacturing a marked spectacle lens blank, the glass mold exhibiting a surface partially masked with a masking agent applied by inkjet printing, the numerical representation configured to be fed to one or more manufacturing machines for manufacturing the glass mold or (ii) data containing computer-readable instructions for controlling one or more manufacturing machines to manufacture the glass mold for manufacturing a marked spectacle lens blank, the glass mold exhibiting a surface partially masked with a masking agent applied by inkjet printing.

In a fifth aspect, the invention provides a non-transitory tangible computer-readable storage medium carrying a data set according to the previous description.

In a sixth aspect, the use of a glass mold with a marking applied to a surface of the glass mold according to a method for applying a marking on a surface of a glass mold for manufacturing a marked spectacle lens blank as described above is suggested, i. e. the use of a glass mold obtainable by a method for applying a marking on a surface of a glass mold for manufacturing a marked spectacle lens blank as described above. It is suggested to use such a glass mold for the manufacturing of a marked spectacle lens.

Concerning the properties of the glass mold and advantages associated with its use, reference is made to the above explanations describing the method for applying a marking on a surface of a glass mold for manufacturing a marked spectacle lens blank. The advantages of the method for applying a marking on a surface of a glass mold apply to the glass mold accordingly.

The use of the glass mold may comprise providing a glass mold with a marking applied to a surface of the glass mold according to a method for applying a marking on a surface of a glass mold for manufacturing a marked spectacle lens blank as described above, and casting a spectacle lens blank in a casting cavity of a mold assembly comprising the glass mold with the marking.

As explained above, the marked glass mold may be arranged in a mold assembly forming a mold cavity to be filled with the polymerizable monomer. Preferably, the marked glass mold is arranged such that a negative of its marking is transferred to the spectacle lens blank during its casting. For example, a marked spectacle lens blank can be made of poly(allyl diglycol carbonate) (CR39).

The marked spectacle lens can later be used for manufacturing a spectacle lens by methods known to the skilled person.

In a further aspect, the invention provides a marked spectacle lens blank manufactured by using a glass mold with a marking applied to a surface of the glass mold according to a method for applying a marking on a surface of a glass mold as described above, i. e. the glass mold is obtained by a method for applying a marking on a surface of a glass mold for manufacturing a marked spectacle lens blank as described above.

The marking of the spectacle lens blank exhibits a high resolution, while the optical quality of the spectacle lens blank is high. The spectacle lens blank exhibits only very little or no defects. Starting from the spectacle lens blank, a spectacle lens is obtainable using methods well known to the skilled person.

In a further aspect, the invention provides an apparatus for applying a marking on a surface of a glass mold for manufacturing a marked spectacle lens blank. The apparatus comprises an inkjet-printing device.

The inkjet-printing device may be configured to print a masking agent, e. g. using the inkjet-printing device, a masking agent may be printed on a surface of a glass mold according to a method for applying a marking on a surface of a glass mold as described above. Concerning further details and advantages of the apparatus, reference is made to the above explanations describing the method for applying a marking on a surface of a glass mold that apply accordingly.

Apart from the inkjet-printing device, the apparatus may comprise further devices for, e. g., handling the glass mold, setting and monitoring process parameters such as temperature, and controlling the inkjet-printing device. For example, the apparatus may comprise a control unit connected to a print head of the inkjet-printing device and configured to provide signals to control the print head, e. g. for ejecting and positioning of droplets. Preferably, the print head may be heated to avoid blockage by solid residues of, e. g., the masking agent used as ink.

In a further aspect, the use of an inkjet-printing device for applying a masking agent on a surface of a glass mold for manufacturing a marked spectacle lens blank is suggested.

Using the inkjet-printing device, a high-resolution pattern of the masking agent on the surface of the glass mold can be obtained enabling the creation of a high-resolution marking. In a preferred embodiment, the inkjet-printing device has a hot melt printhead.

### BRIEF DESCRIPTION OF THE DRAWINGS

Further features, properties and advantages of the present invention will become clear from the following description of embodiments in conjunction with the accompanying drawings.
- Figure 1: illustrates an exemplarily mold assembly used to produce spectacle lens blanks in exploded view.
- Figure 2a-d: illustrates a method for applying a marking on a surface of a glass mold for manufacturing a marked spectacle lens blank.
- Figure 3: shows a schematic representation of a masked glass mold.
- Figure 4: shows a schematic representation of a glass mold with a marking.
- Figure 5: shows a schematic representation of a Recon image of the glass mold shown in figure 4.
- Figure 6: illustrates an exemplarily apparatus for applying a marking on a surface of a glass mold.

### DETAILED DESCRIPTION

Exemplary embodiments of the present spectacle lens will be described with respect to figures 1 to 6.

Fig. 1 shows a mold assembly 10 for a mold casting of a spectacle lens blank 4. The mold assembly 10 comprises a sealing element 11 with an extension 12, a front mold 13, and a back mold 14. The sealing element 11 may be rubber-like and connects the front mold 13 with the back mold 14 forming a mold cavity 15. In the mold casting process for producing the spectacle lens blank 4, a polymerizable monomer such as of the thermoset allyldiglycol carbonate, which is known for example under the trade name CR39, is filled into the mold cavity 15 through the extension 12. By curing of the monomer, a spectacle lens blank 4 is formed.

In addition to the desired surface shape, the front and/or back mold 13, 14 exhibit a marking 1a, 1b in the form of a recess or elevation, whose corresponding negative form is transferred to the spectacle lens blank 4 during the casting process, e. g. embossed into the spectacle lens blank 4.

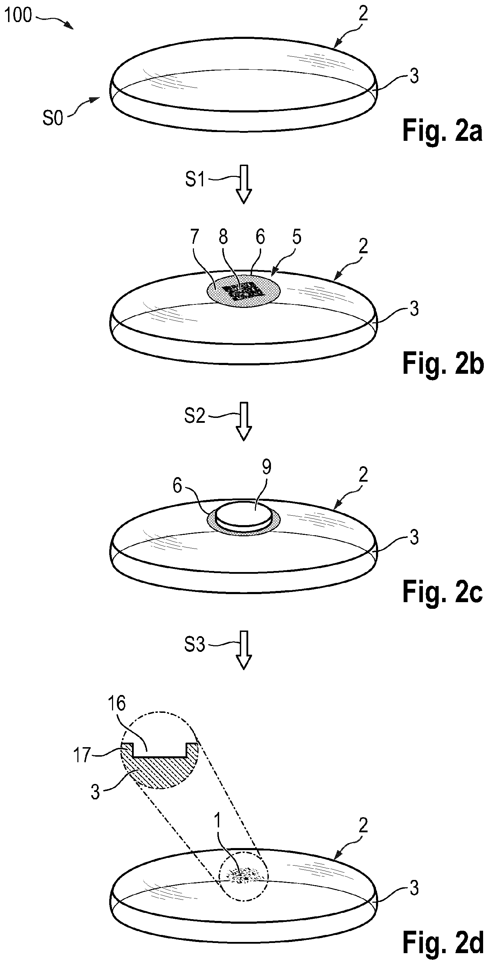

Referring to figures 2a to 2d, an exemplarily method 100 for applying a marking 1 on a surface 2 of a glass mold 3 for manufacturing a marked spectacle lens blank 4 is explained in the following.

In a first step S0, a standard mineral glass mold 3 with a surface 2 is provided. The surface 2 may be cleaned, e. g. by washing with water, washing with 1 M KOH and/or alcohol such as ethanol.

As depicted in figure 2a, the glass mold 3 may be a back mold 14 whose convex surface 2 is to be marked. The convex surface 2 will limit the mold cavity 15 when using the glass mold 3 as a back mold 14 in a mold assembly 10. Thus, a negative of any marking 1 on the surface 2 may be transferred to a spectacle lens blank 4 manufactured using a mold assembly 10 with the glass mold 3 as back mold 14. However, the invention is not limited to the marking of back molds 14 and the described method 100 may be used for any other glass mold 3 accordingly.

In step S1, a pattern 5 of a masking agent 6 is applied on the surface 2 of the glass mold 3 by inkjet-printing. Figure 2b shows the glass mold 3 after step S1. The pattern 5 may comprise elements such as figures, numbers, etc. As shown in figure 2b, the pattern 5 applied to the surface 2 in the exemplarily method 100 comprises a so-called DataMatrix-Code surrounded by a circular outer area.

The pattern 5 may, for example, be inkjet-printed with an X-Cube digital lens inking device from the manufacturer Tecoptique. This device allows to print patterns 5 on any type of glass molds 5. However, other printing devices could be used as well. The X-Cube device was used with an M-series industrial piezo carrier jet print head manufactured by Xerox, corp. (Xerox M1). This print head is ideal for high demand applications and can jet fluids within a temperature range from ambient to 140 °C. The printing distance, i. e. the distance between the surface 2 and the print head was chosen between 0.5 to 3 mm, the printing resolution was 900 dpi with 3 printing passes. However, the printing resolution as well as the amount of printing passes can be varied, e. g. between 25 to 1200 dpi and 1 to 10 passes, respectively. The printing temperature was 20 °C above the melting temperature of the masking agent used.

In the exemplarily method 100, either palmitic acid or 1-monostearin was used as masking agent 6 and applied pixel-wise as a temporary protecting matrix by hot-melt ink-jetting for masking purposes. The melting temperature of the masking agent 6 is about 61.8 °C (palmitic acid) or 40.5 °C (1-monostearin), respectively.

By applying the pattern 5 of the masking agent 6, a surface 2 of the glass mold 3 where a preselected part 7 with at least one opening is obtained, specifically, a partially masked surface 2 is obtained which consists of masked areas 7 (areas covered with the masking agent 6) and non-masked areas 8 (areas not covered with the masking agent 6 comprising at least one opening 8). The non-marked areas 8 at least partly correspond to the later marking 1.

During step S2, the etching agent 9 is applied at least onto a part of the surface 2 comprising the at least one opening 8, specifically, onto the partially masked surface 2. Figure 2c depicts the situation after step S2. In the exemplarily method 100, an aqueous solution comprising 5 wt.-% ammonium hydrogen difluoride (CAS 1341-49-7), 0.8 wt.-% phosphoric acid (CAS 7664-38-2), 0.4 wt.-% sulfuric acid (CAS 7664-93-9), 2 wt.-% sodium alkylbenzene sulfonate (CAS 270-115-0) was used as etching agent 9. The etching agent 9 may be applied manually but also automated. The etching agent 9 is left on the partially masked surface 2 for a certain time period, e. g. 1 min at room temperature, before being removed.

During steps S3 and S4, the etching agent 9 and the masking agent 6 are removed. This is done by firstly removing the etching agent 9 by washing with water (S3). Thereafter, the masking agent 6 is removed by using hot water, i. e. water with a temperature equal to or higher than the melting temperature of the masking agent 6. Subsequently, the glass mold 3 is washed with a 1 M aqueous solution of potassium hydroxide which neutralizes any residues of the etching agent 9 and converts the masking agent 6 into a water-soluble salt enabling its complete removal from the surface 2 of the glass mold 3.

After cleaning, a glass mold 3 with a marking 1 is obtained as shown in figure 2d. The marking 5 comprises recesses 16 corresponding to etched areas (openings) and elevations 17 corresponding to non-etched areas as shown in the enlargement of figure 2d.

The obtained glass mold 3 can now be assembled into a mold assembly 10 and used for casting of a marked spectacle lens 4 as described with regard to figure 1.

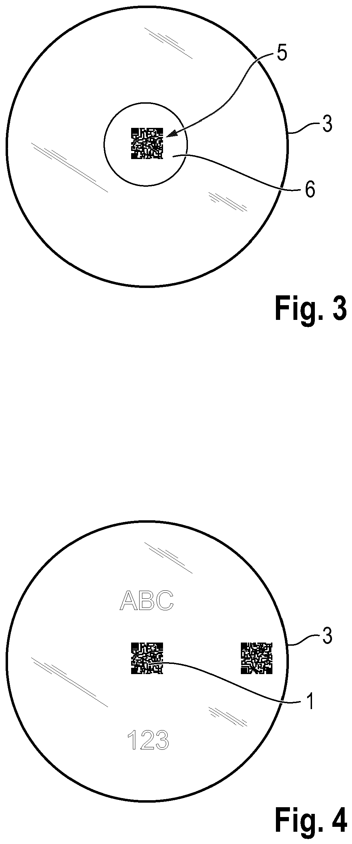

Figure 3 shows an example of a glass mold 3 with a pattern 5 of a masking agent 6 applied thereon by inkjet-printing according to method steps S0 and S1 described with respect to figures 2a and 2b.

Figure 4 shows an example of a glass mold 3 with a marking 1 obtained from the masked glass mold 3 of figure 3 after etching and cleaning according to method steps S2 to S4 described with respect to figures 2c and 2d. The glass mold 3 exhibits two further markings: "ABC" and "123", both obtained by a conventional etching method using a continuous masking layer engraved with a carbide-tip to obtain a pattern.

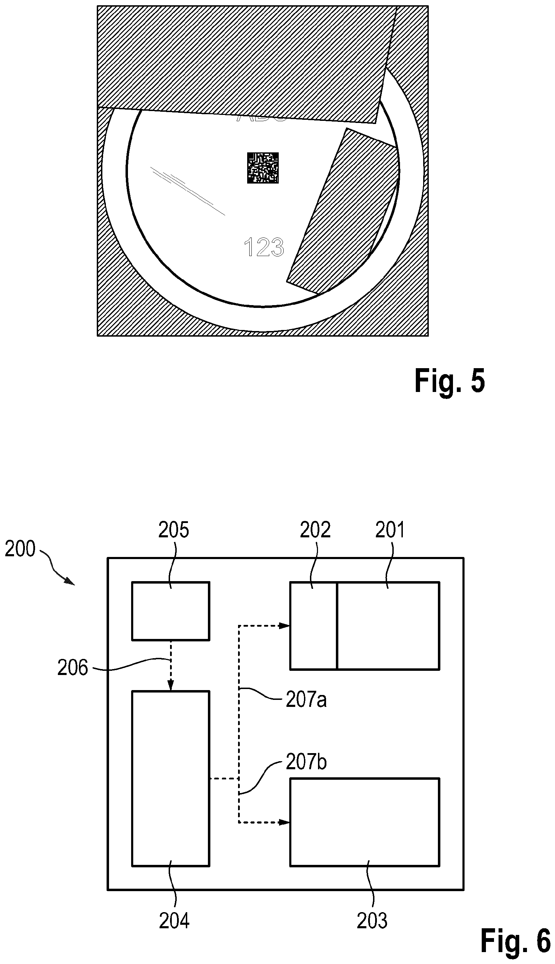

Figure 5 shows a schematic representation of a Recon image of the marked glass mold 3 shown in figure 4 obtained with a Zeiss Recon system. The Zeiss Recon system is a system normally used to obtain high quality images of ophthalmic lenses for the detection of, e. g., laser engravings and similar structures. In this case, the Recon system is used to recognize the marking 1 on the surface 2 of the glass mold 3. The DMC code of the marking 1 was successfully recognized proofing the suitability of the proposed method 100 for the application of markings 1 on a surface 2 of a glass mold 3 for the manufacturing of a marked spectacle lens blank.

The suggested method 100 provides a way to pixel-wise apply a protective, temporary coating of a masking agent 6u that serves as a negative to a consequent etching procedure. The protective coating consists of a fatty acid that is being applied via hot melt print heads. The chemical used to form the temporary protecting matrix, i. e. the masking agent 6, was chosen to be easily match with existing down-stream processes: a) low melting point allowing for de-melting using city water (similar to de-blocking), and b) allowing for complete conversion to a water-soluble salt by standard caustics such as KOH or NaOH used in the production of optical elements.

Figure 6 illustrates an exemplarily apparatus 200 for applying a marking 1 on a surface 2 of a glass mold 3. The apparatus 200 comprises an input unit 205 which can represent a human-machine interface used to define or specify the marking 1, e. g. by selecting a certain marking 1 from a catalogue of markings using a touchscreen, typing a letter marking using a keyboard, etc. Then, the input unit 205 generates a corresponding input signal 206 which is transmitted to the control unit 204.

The control unit 204 is connected to a print head 202 of an inkjet-printing device 201 which can be heated and a holding and positioning unit 203 configured to hold and position a glass mold 3 to be marked. The control unit 204 outputs control signals 207a, 207b to control the print head 202 and the holding and positioning unit 203 to apply a pattern 5 of a masking agent 6 to a surface 2 of the glass mold 3 by inkjet-printing. For example, the position of the glass mold 3 with respect to the print head 202 can be defined by moving the print head 202 and/or the glass mold 3 mounted on the holding and positioning unit 203. Moreover, the control signal 207a may cause the temperature of the print head 202 to increase above the melting temperature of the masking agent 6.

Preferred features of the invention are:
1. A method configured for marking a glass mold for manufacturing a spectacle lens blank wherein a pattern of a masking agent is applied on a preselected part of a surface of a glass mold,
   characterized by applying the pattern of the masking agent by inkjet-printing.
2. A method according to clause 1 wherein a pattern of a masking agent for etching a surface of a glass mold is applied on a preselected part of the surface of the glass mold,
   characterized by applying the pattern of the masking agent by inkjet-printing.
3. A method according to clause 1 or 2, configured for marking a glass mold for manufacturing a marked spectacle lens blank, the method comprising the following steps: applying a pattern of a masking agent on the surface of the glass mold with at least one opening, and applying an etching agent at least onto a part of the surface of the glass mold comprising at least one opening, wherein the pattern of the masking agent is applied by inkjet-printing.
4. The method of any one of the preceding clauses, wherein the method comprising the following steps: applying a pattern of a masking agent on the surface of the glass mold to obtain a partially masked surface with masked areas and non-masked areas, and applying an etching agent onto the partially masked surface and etching the non-masked areas to form the marking, wherein the pattern of the masking agent is applied by inkjet-printing.
5. The method of any one of the preceding clauses, wherein the masking agent is a fatty acid and/or a fatty acid ester.
6. The method of any one of the preceding clauses, wherein the masking agent is at least one selected from the group of palmitic acid and monostearin.
7. The method of any one of the preceding clauses, wherein the masking agent exhibits a melting temperature between 30 °C and 80 °C.
8. The method of clause 5, wherein the melting temperature of the masking agent is between 40 °C and 65 °C.
9. The method of any one of the preceding clauses, wherein the masking agent can at least be partly converted into a water-soluble salt by applying an aqueous solution of an Arrhenius base.
10. The method of clause 9, wherein the Arrhenius Base is sodium hydroxide and/or potassium hydroxide.
11. The method of any one of the relevant preceding clauses, wherein the etching agent provides hydrofluoric acid.
12. The method of any one of the relevant preceding clauses, wherein the etching agent comprises hydrofluoric acid.
13. The method of any one of the relevant preceding clauses, wherein the etching agent forms hydrofluoric acid upon activation.
14. The method of any one of the relevant preceding clauses, wherein the etching agent is an etching cream or etching paste.
15. The method of any one of the relevant preceding clauses, wherein the method comprises removing the etching agent and/or the masking agent.
16. The method of any one of the relevant preceding clauses, wherein the etching agent is removed by washing with water having a temperature below the melting point of the masking agent
17. The method of any one of the relevant preceding clauses, wherein the masking agent is removed by washing with water having a temperature equal to or higher than the melting point of the masking agent.
18. The method of any one of the relevant preceding clauses, wherein the temperature of the water is higher than 60 °C.
19. The method of any one of the relevant preceding clauses, wherein the masking agent is removed by washing with an aqueous solution of an Arrhenius base.
20. The method of any one of the relevant preceding clauses, wherein the Arrhenius Base is sodium hydroxide and/or potassium hydroxide.
21. The method of any one of the relevant preceding clauses, wherein the inkjet printing is carried out using an inkjet-printing device with a heated printing head or a hotmelt printing head.
22. The method of any one of the relevant preceding clauses, wherein the print head is heated to a temperature equal to or higher than the melting point of the masking agent.
23. The method of any one of the relevant preceding clauses, wherein the etching agent is applied by pad printing.
24. A glass mold for manufacturing a marked spectacle lens blank exhibiting a surface partially masked with a masking agent, wherein the masking agent is applied by inkjet printing.
25. The glass mold of any one of the relevant preceding clauses, wherein the masking agent is a fatty acid and/or a fatty acid ester
26. The glass mold of any one of the relevant preceding clauses, wherein the masking agent is at least one selected from the group of palmitic acid and monostearin.
27. The glass mold of any one of the relevant preceding clauses, wherein the masking agent can be converted into a water-soluble salt by applying an aqueous solution of an Arrhenius base.
28. The glass mold of any one of the relevant preceding clauses, wherein the Arrhenius Base is sodium hydroxide and/or potassium hydroxide.
29. Data set in the form of a computer-readable data carrier signal comprising at least one kind of the following kinds of data: (i) a virtual representation of the glass mold according to any one of any one of the relevant preceding clausesconfigured to be fed to one or more manufacturing machines for manufacturing the glass mold or (ii) data containing computer-readable instructions for controlling one or more manufacturing machines to manufacture the glass mold according to any one of the relevant preceding clauses.
30. Data set stored on a computer-readable medium comprising at least one kind of the following kinds of data: (i) a virtual representation of the glass mold according to any one of the relevant preceding clauses configured to be fed to one or more manufacturing machines for manufacturing the glass mold or (ii) data containing computer-readable instructions for controlling one or more manufacturing machines to manufacture the glass mold according to any one of the relevant preceding clauses.
31. Non-transitory tangible computer-readable storage medium carrying a data set according to any one of the relevant preceding clauses.
32. Use of a glass mold with a marking applied to a surface of the glass mold according to a method of any one of the relevant preceding clauses for manufacturing a marked spectacle lens blank.
33. The use of any one of the relevant preceding clauses, wherein the marked spectacle lens blank is manufactured by casting the spectacle lens blank in a casting cavity of a mold assembly comprising the glass mold with the marking.
34. The use of any one of the relevant preceding clauses, wherein the spectacle lens blank is made of poly(allyl diglycol carbonate).
35. The use of a spectacle lens blank manufactured according to the use of any one of the relevant preceding clauses, for manufacturing a spectacle lens.
36. A marked spectacle lens blank manufactured by using a glass mold with a marking applied to a surface of the glass mold according to a method of any one of the relevant preceding clauses.
37. An apparatus for applying a marking on a surface of a glass mold for manufacturing a marked spectacle lens blank, the apparatus comprising an inkjet-printing device.
38. The apparatus of any one of the relevant preceding clauses, wherein the inkjet-printing device is configured to print a masking agent.
39. Use of an inkjet-printing device for applying a masking agent on a surface of a glass mold for manufacturing a marked spectacle lens blank.
40. A masking agent suitable for masking a glass mold configured to manufacture a marked spectacle lens blank, wherein the masking agent comprises liquefied unsaturated or saturated fatty acid and/or fatty acid ester having a melting point between 30°C and 80°C.
41. The masking agent according to any one of the relevant preceding clausesfor masking a glass mold configured to manufacture a marked spectacle lens blank, wherein the masking agent is liquefied unsaturated or saturated fatty acid and/or fatty acid ester having a melting point between 30°C and 80°C.
42. The masking agent according to any one of the relevant preceding clauses, wherein the masking agent can at least be partly converted into a water-soluble salt by applying an aqueous solution of an Arrhenius base.
43. The masking agent according to any one of the relevant preceding clauses, characterized in that the masking agent is at least one selected from the group consisting of palmitic acid and monostearin.

### List of reference numerals

- 1, 1a, 1b: marking
- 2: surface
- 3: glass mold
- 4: spectacle lens blank
- 5: pattern
- 6: masking agent
- 7: preselected part / masked area
- 8: opening / non-masked area
- 9: etching agent
- 10: mold assembly
- 11: sealing element
- 12: extension
- 13: front mold
- 14: back mold
- 15: mold cavity
- 16: recess
- 17: elevation
- 100: method
- 200: apparatus
- 201: inkjet-printing device
- 202: print head
- 203: holding and positioning unit
- 204: control unit
- 205: input unit
- 206: input signal
- 207a, 207b: control signal
- S0: providing a glass mold
- S1: applying a pattern of a masking agent on a preselected part of the surface of the glass mold with at least one opening
- S2: applying an etching agent onto at least onto a part of the surface comprising the at least one opening
- S3: removing the etching agent
- S4: removing the masking agent
- S4a: cleaning with water
- S4b: washing with an aqueous solution of an Arrhenius base
- S5: casting a spectacle lens blank

## Claims

1. A method (100) configured for marking a glass mold (3) for manufacturing a spectacle lens blank (4) wherein a pattern (5) of a masking agent (6) is applied on a preselected part (7) of a surface (2) of a glass mold (3),
**characterized by** applying the pattern (5) of the masking agent (6) by inkjet-printing.

2. The method (100) according to claim 1, **characterized by** further comprising a step of liquefying the masking agent (6) by heating the masking agent (3) to a temperature equal to or higher than the melting point of the masking agent (6) prior to applying the masking agent (6) onto the surface of the glass mold (3).

3. The method (100) according to claim 1 or 2, **characterized in that** the inkjet-printing is done by using the inkjet-printing device with a heated printing head or a hotmelt printing head.

4. The method (100) according to any one of claims 1 to 3, **characterized in that** the masking agent (6) comprises unsaturated or saturated fatty acid and/or fatty acid ester with a melting point between 30°C and 80°C.

5. The method (100) according to any one of claims 1 to 4, **characterized in that** the masking agent (6) can at least be partly converted into a water-soluble salt by applying an aqueous solution of an Arrhenius base.

6. The method (100) according to any one of claims 1 to 5, **characterized in that** the masking agent (6) is at least one selected from the group consisting of palmitic acid and monostearin.

7. The method (100) according to any one of the claims 1 to 6 **characterized by** further comprising:
applying an etching agent (9) at least onto a part of the surface (2) which is not masked.

8. The method (100) according to any one of claims 1 to 7 **characterized by** further comprising:
removing the masking agent (6) by washing with an aqueous solution of an Arrhenius base (S4b) and/or by washing with water (S4a) having a temperature equal to or higher than the melting point of the masking agent (6).

9. The method (100) according to Claim 7 or 8 **characterized by** further comprising:
- removing the etching agent (9) by washing with water having a temperature below the melting point of the masking agent (6).

10. The method (100) configured for manufacturing a spectacle lens blank (4) using the glass mold marked according to any one of Claims 1 to 9.

11. A data set in the form of a computer-readable data carrier signal or a computer-readable medium comprising at least one kind of the following kinds of data: (i) a virtual representation of the glass mold (3) manufactured by any one of claims 1 to 9 configured to be fed to one or more manufacturing machines for manufacturing the glass mold (3) or (ii) data containing computer-readable instructions for controlling one or more manufacturing machines to manufacture the glass mold (3) manufactured according to any one of claims 1 to 9.

12. A masking agent suitable for masking a glass mold (3) configured for manufacturing a marked spectacle lens blank (4) from an etching agent, **characterized in that** the masking agent (6) comprises liquefied unsaturated or saturated fatty acid and/or fatty acid ester with a melting point between 30°C and 80°C.

13. The masking agent according to Claim 12, **characterized in that** the masking agent (6) can at least be partly converted into a water-soluble salt by applying an aqueous solution of an Arrhenius base.

14. The masking agent according to Claim 12 or 13, **characterized in that** the masking agent (6) is at least one selected from the group consisting of palmitic acid and monostearin.

15. An apparatus (200) for applying a marking (1, 1a, 1b) on a surface (2) of a glass mold (3) for manufacturing a marked spectacle lens blank (4), **characterized by** comprising an inkjet-printing device (201).
